# EUROPÄISCHE PATENTSCHRIFT

(11) **EP 3 685 518 B1**
(45) Veröffentlichungstag und Bekanntmachung des Hinweises auf die Patenterteilung: **29.12.2021**
(21) Anmeldenummer: 18765655.8
(22) Anmeldetag: 12.09.2018
(51) Int. Cl.: G01S 13/74, G01S 5/02, G01S 13/86, H04B 7/06, G01S 13/931, H04W 4/02, H04W 64/00

(54) **TRANSCEIVER MIT EINEM SENSOR ZUR BERECHNUNG EINER POSITIONSINFORMATION EINER ANTENNE EINES WEITEREN TRANSCEIVERS**
TRANSCEIVER WITH A SENSOR TO COMPUTE POSITION INFORMATION OF AN ANTENNA OF ANOTHER TRANSCEIVER
ÉMETTEUR-RÉCEPTEUR AVEC UN CAPTEUR POUR LE CALCUL D'UNE INFORMATION DE POSITION D'UNE ANTENNE D'UN AUTRE ÉMETTEUR-RÉCEPTEUR

(30) Priorität: 14.09.2017 EP 17191097
(43) Veröffentlichungstag der Anmeldung: 29.07.2020
(73) Patentinhaber: Fraunhofer-Gesellschaft zur Förderung der angewandten Forschung e.V., 80686 München (DE)
(72) Erfinder: WEILER, Richard, 10785 Berlin (DE); MAHLER, Kim, 12055 Berlin (DE); KEUSGEN, Wilhelm, 14089 Berlin (DE); WITTIG, Sven, 10719 Berlin (DE); HAUSTEIN, Thomas, 14469 Potsdam (DE)
(74) Vertreter: Zimmermann, Tankred Klaus
(86) Internationale Anmeldenummer: PCT/EP2018/074642
(87) Internationale Veröffentlichungsnummer: WO 2019/053079

(56) Entgegenhaltungen:
- EP-A1- 2 911 435
- WO-A1-2017/108688
- US-A1- 2016 277 941

## Beschreibung

Ausführungsbeispiele der vorliegenden Erfindung beziehen sich auf einen Transceiver sowie ein Verfahren zum Betreiben desselben. Bevorzugte Ausführungsbeispiele beziehen sich auf einen Transceiver mit einer Funkschnittstelle mit hoher Signalrichtcharakteristik, wie z. B. eine Funkschnittstelle für Millimeterwellen.

Aufgrund der Anforderungen höherer autonomer Fahrfunktionen in zukünftigen KFZ an Datenrate und Latenz der Fahrzeug-zu-Fahrzeug-Kommunikation werden diese neben heute bereits standardisierten Kurzstreckenfunksystemen (DSRC) langfristig auch mit Funkschnittstellen in Millimeterwellen (mmW) Frequenzbändern ausgerüstet werden. Für kooperative Fahranwendungen im Fernverkehr (z.B. Platooning) bieten mmW-basierte Punkt-zu-Punkt-Verbindungen innerhalb von Fahrzeuggruppen entscheidende Leistungsvorteile. Die erforderliche Verwendung hochdirektiver Antennen in Verbindung mit dem dynamischen und heterogenen Umfeld auf der Straße stellt eine besondere Herausforderung u.a. hinsichtlich Verbindungsaufbau und -aufrechterhaltung, sowie ad-hoc koordiniertem Mediumzugriff dar. In diesem Zusammenhang auftretende Problemstellungen beinhalten nicht abschließend das Auffinden und Identifizieren mmW-fähiger Kommunikationspartner, die (elektronische) Ausrichtung der Sende- und Empfangsantennen aufeinander und die Koordination von Kommunikationsressourcen (Zeit, Frequenz).

Ein für die Problemstellung illustrativer Fall ist die Annäherung eines Fahrzeugs von hinten an ein oder mehrere bereits kommunizierende Fahrzeuge auf der Autobahn, das durch Aufbau einer breitbandigen Funkverbindung ein kooperativ-autonomes Fahren in dieser Fahrzeuggruppe initiieren möchte.

Kurz- bis mittelfristig wird V2V Kommunikation auf Basis von IEEE 802.11p und dem darauf aufbauenden ITS-G5 (DSRC), sowie LTE-V ab 3GPP Release 14 realisiert werden. Der Fokus in diesen Technologien liegt auf der Kommunikation kurzer Statusnachrichten bei vergleichsweise niedriger Bandbreite.

Auch in der Patentliteratur gibt es Stand der Technik hierzu. Es ist beispielsweise die WO 2017/108688 A1 zu nennen. Diese zeigt ein Kommunikationsgerät, das mit benachbarten Geräten kommunizieren kann. Dieses Kommunikationsgerät kann einen Sensor, wie z. B. einen Reader, Radar oder Bildsensor umfassen. Darüber hinaus ist auch noch auf die US 2016/277941 hinzuweisen. Diese zeigt ein Fahrzeug mit einem Positionsdetektor und einer drahtlosen Kommunikationseinheit, wobei der Detektor eine Position eines Zielfahrzeugs bestimmt und die Kommunikationseinheit ein Beammuster basierend auf der Positionsinformation formt.

Die Koordination der Kommunikation sowie der Austausch von Steuerinformationen in mmW Kommunikationsnetzen erfolgt im zeitlichen Wechsel mit der Nutzdatenkommunika tion über denselben Funkkanal. Die Koordination des zeitlichen Kommunikationsablaufs erfolgt entweder explizit durch eine der beteiligten Stationen oder dezentral. Zum Auffinden von Kommunikationspartnern und initiieren von Verbindungen werden entweder quasi-omnidirektionale Antennen mit reduzierter Kommunikationsreichweite oder ein sequenzielles Absuchen aller möglichen Antennenausrichtungen verwendet. Nach erfolgreichem Verbindungsaufbau wird die optimale Antennenausrichtung durch wechselseitigen sequenziellen Austausch von Steuerinformationen bestimmt. Deshalb besteht der Bedarf nach verbessertem Ansatz.

Aufgabe der vorliegenden Erfindung ist es ein Konzept zur Ausrichtung eines mittels eines Transceivers erzeugten Funksignales zu verbessern.

Die Aufgabe wird durch die unabhängigen Patentansprüche 1, 12 und 14 gelöst.

Ausführungsbeispiele der vorliegenden Erfindung schaffen einen Transceiver, der mit mindestens einer Antenne gekoppelt ist und ausgebildet ist, eine Kommunikationsverbindung zu einem weiteren Transceiver aufzubauen. Hierbei ist ein von der mindestens einer Antenne ausgesendetes und/oder empfangenes Funksignal zum Aufbau der Kommunikationsverbindung ein gerichtetes Funksignal. Zusätzlich umfasst der Transceiver einen Sensor, der ausgebildet ist, um eine Positionsinformation, wie z.B. eine Richtung, relative Position oder absolute Position, einer Antenne des weiteren Transceivers zu erkennen. Hierunter wird also auch eine Position eines mit der Antenne in Relation stehenden Elements verstanden. Der Transceiver ist nun ausgebildet, um mindestens eine Antenne des Transceivers so anzusteuern, dass das Funksignal in eine Richtung gerichtet ist, die zu der Position entsprechend Positionsinformation der Antenne des weiteren Transceivers zeigt.

Kern der vorliegenden Erfindung liegt also darin, dass eine Ausrichtung einer Antenne oder eines Antennen-Beams besser durchgeführt werden kann, wenn die Position oder zumindest die relative Position bzw. relative Richtung der Antenne des Kommunikationspartners bekannt ist. Für die Erkennung der Position/Richtung können ein oder mehrere Sensoren unterschiedlicher Sensortypen, wie z. B. eine Kamera, Radar oder Lidar oder eine Kombination aus selben, eingesetzt werden. Ausgehend von der erkannten Position /Richtung wird die Antenne auf den gewünschten Kommunikationspartner ausgerichtet. Dies bietet den Vorteil, dass es zu keiner Störaussendung (blinde Suche) kommt. Des Weiteren wird der Verbindungsaufbau deutlich beschleunigt. Das System arbeitet autonom, so dass dieses nicht in Abhängigkeit zu den Daten oder anderen Funkkommunikationen steht. Auch besteht keine Abhängigkeit zu äußeren Koordinatensystemen (z. B. GNSS), so dass die Erkennung sogar in Bewegung der Objekte erfolgen kann, was typisch ist für die oben erläuterte Vehicle-to-Vehicle-Kommunikation.

Entsprechend Ausführungsbeispielen ist der Transceiver über mindestens zwei Antennen gekoppelt und ausgebildet, um mit den mindestens zwei Antennen das Funksignal zu richten, indem ein Beam durch die zwei Antennen geformt wird und diese (mittels Beamforming) gelenkt wird. Entsprechend weiteren Ausführungsbeispielen wäre es denkbar, dass der Transceiver mit zwei Antennen in unterschiedlichen Positionen gekoppelt ist, wobei das Richten der Kommunikationsverbindung durch die Auswahl mindestens zweier Antennen erfolgen kann. Hierbei wäre es denkbar, dass die Antennen an unterschiedlichen Positionen sowieso eine Richtcharakteristik aufweisen.

Entsprechend weiteren Ausführungsbeispielen ist eine Berechnungseinheit mit dem Sensor gekoppelt bzw. Bestandteil des Sensors. Diese Berechnungseinheit ist ausgebildet, auf Basis eines Sensorsignals des Sensors eine Merkmalsextraktion von einem oder mehr Merkmalen durchzuführen, um die Position der Antenne des weiteren Transceivers zu erkennen. Bei dem Merkmal kann es sich um ein konstruktionsinhärentes Merkmal oder um ein dediziertes, d. h. zusätzlich angebrachtes Merkmal handeln. Wenn man von dem Ausführungsbeispiel ausgeht, entsprechend welchem der Transceiver sowie die zugehörige Antennen am Fahrzeug angeordnet sind, kann das konstruktionsinhärente Merkmal beispielswese die Silhouette des Fahrzeuges sein, während das dedizierte Merkmal ein zusätzliches Kennzeichen darstellt. Da sowohl die Silhouette als auch das zusätzliche Kennzeichen typischerweise nicht direkt die Antenne beschreiben, ist entsprechend weiteren Ausführungsbeispielen eine Relation, d. h. also ein Abstand zwischen dem ein oder mehreren Merkmal und der anzupeilenden Position der Antenne bekannt. Diese Relation bzw. dieser Abstand kann sich aus einer Klassifizierung des Merkmals ergeben. Bei der Merkmalsextraktion erfolgt entsprechend beanspruchten Ausführungsbeispielen eine Klassifizierung, die dann ein Rückschluss auf zusätzliche Informationen, wie z. B. die Relation zwischen dem Merkmal und der Antenne zulässt. Diese Klassifizierung bzw. das Merkmal lässt einen Rückschluss auf eine MAC-Adresse oder zumindest einen Teil der MAC-Adresse des weiteren Transceivers zu, so dass der weitere Transceiver identifizierbar ist.

Bei obigen Ausführungsbeispielen wurde von einer statischen Positionserkennung, d. h. insbesondere von einer Relativ-Positionserkennung zwischen dem Sensor und der Antenne bzw. einem der Antenne zugeordneten Merkmal ausgegangen. Entsprechend weiteren Ausführungsbeispielen wäre es natürlich genauso denkbar, dass die Position dynamisch, d.h. über die Zeit ermittelt wird, um eine Bewegungsinformation der Antenne des weiteren Transceivers zu erhalten.

Entsprechend weiterem Ausführungsbeispiel kann der Transceiver eine so genannte Simulationseinheit umfassen, die ausgebildet ist, ausgehend von einer Umgebungskarte des Transceivers und/oder des weiteren Transceivers die (statische) Reflexionssituation für das Funksignal zu simulieren / ermitteln. Der Transceiver kann ausgehend von den so ermittelten Reflexionen Störungen aufgrund selbiger kompensieren.

Ein weiteres Ausführungsbeispiel bezieht sich auf ein Fahrzeug mit einem oben genannten Transceiver.

Ein zusätzliches Ausführungsbeispiel bezieht sich auf ein Verfahren zum Betreiben eines Transceivers, wie oben charakterisiert wurde. Das Verfahren umfasst die Schritte Aufbauen eine Kommunikationsverbindung zu einem weiteren Transceiver mittels eines gerichteten Funksignals, Erkennen einer Positionsinformation einer Antenne des weiteren Transceivers mittels eines Sensors und Ansteuern der mindestens einen Antenne des Transceivers, so dass das Funksignal in die Richtung gerichtet ist, die zu der Position entsprechend Positionsinformation zugehörig zu der Antenne des weiteren Transceivers zeigt. Dieser Schritt kann entsprechend weiteren Ausführungsbeispielen iterativ wiederholt werden, um die Position bzw. die Positionsänderung des weiteren Transceivers oder der Antenne des weiteren Transceivers zu tracken. Entsprechend weiteren Ausführungsbeispielen kann das Verfahren als Comupterprogramm ausgeführt sein.

Ausführungsbeispiele der vorliegenden Erfindung werden nachfolgend anhand der beiliegenden Zeichnung erläutert. Es zeigen:
- Fig. 1: ein schematisches Blockschaltbild eines Transceivers gemäß einem Basisausführungsbeispiel;
- Fig. 2: ein schematisches Flussdiagramm eines ausgeführten Verfahrens zum Betreiben eines Transceivers gemäß einem Ausführungsbeispiel; und
- Fig. 3: eine schematische Darstellung von drei Fahrzeugen mit entsprechenden Transceivern zur Illustration des Betriebs beim Betreiben des oben genannten Transceivers gemäß erweiterten Ausführungsbeispielen.

Bevor nachfolgend Ausführungsbeispiele der vorliegenden Erfindung anhand der beiliegenden Zeichnungen erläutert werden, sei darauf hingewiesen, dass gleichwirkende Elemente und Strukturen mit gleichen Bezugszeichen versehen sind, so dass die Beschreibung derer aufeinander anwendbar bzw. austauschbar ist.

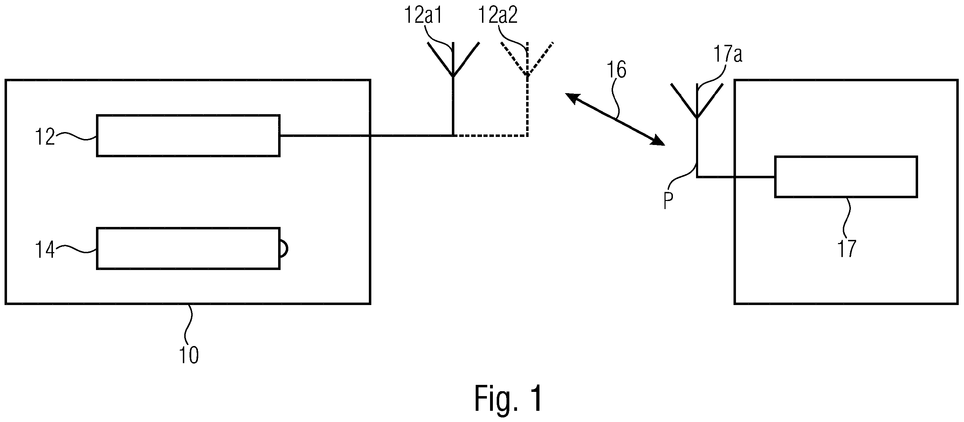

Fig. 1 zeigt einen Transceiver 10 mit dem eigentlichen Funkmodul 12, das mit ein oder mehreren Antennen 12a1 und 12a2 gekoppelt ist. Da die Antenne 12a2 optional ist, diese gestrichelt dargestellt. Zusätzlich weist der Transceiver 10 einen Sensor, wie z. B. eine Kamera oder einen Radar- bzw. Lidar-Sensor 14 auf.

Der Transceiver 10 soll eine Kommunikationsverbindung 16 zu einem weiteren Transceiver 17 bzw. einer Antenne des weiteren Transceivers 17a aufbauen. Der weitere Transceiver 17 bzw. die Antenne 17a befindet sich an einer unbekannten Position.

Da die Kommunikationsverbindung 16 auf einen gerichteten Funksignalaustausch, d. h. gerichtetes ausgesendetes und/oder gerichtetes empfangenes Signal basiert, soll eine aktive Ausrichtung des Funksignals zugehörig zu der Kommunikationsverbindung 16 erfolgen.

Hierzu wird die Position P der Antenne 17a oder zumindest eine Positionsinformation, wie eine Relativposition oder Richtung, unter Zuhilfenahme des Sensors 14 bestimmt. Der Sensor kann beispielsweise ein optischer Sensor, wie z. B. eine Kamera, oder auch aktiver Sensor, wie ein Radar oder Lidar, sein. Das Erkennen der Position P bzw. der Antenne kann durch optionale Merkmale, die die Antennen bzw. die Position derselben kennzeichnen, unterstützt werden. Diese Merkmale sind beispielsweise in einer festen Relation zur Antenne angebracht.

Wenn dann die Position P bzw. Relativposition bzw. Richtung der Antenne 17a bekannt ist, kann der Transceiver 12 z. B. eine durch die zwei Antennen 12a1 und 12a2 geformte Funksignalkeule (Beam) durch entsprechende Ansteuerung der zwei Antennen 12a1 und 12a2 ausrichten (Beamforming). Die Ausrichtung erfolgt so, dass das Signal möglichst gebündelt zur Position P zeigt. Hierbei heißt möglichst gebündelt bzw. allgemein gebündelt, dass das Signal beispielsweise als Beam (Funkkeule) mit einem Öffnungswinkel von < 30° oder < 20° oder sogar als Beam von < 10° oder 5° ausgesendet wird. Ferner kann der Beam auch einen maximalen Öffnungswinkel von 2,5°, 2°, 1° oder 0,5° haben.

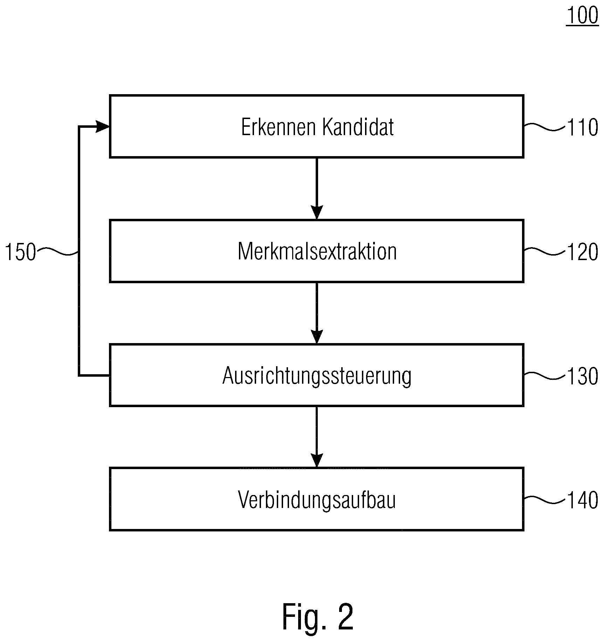

Nachfolgend wird Bezug nehmend auf Fig. 2 das Verfahren zur Ausrichtung der durch die ein oder mehreren Antennen 12a1 und 12a2 beschrieben. Das Verfahren 100 umfasst die fünf Schritte 110, 120, 130, 140 und 150, wobei die Schritte 140 und 150 optional sind.

Der Schritt 110 bezieht sich auf das Erkennen von möglichen Kommunikationspartnern bzw. -kandidaten anhand von Sensordaten. In dem nächsten Schritt werden Merkmale aus den Sensordaten extrahiert, um eine relative räumliche Zuordnung der Kandidaten zu einer lokalen Position zu ermöglichen. Dieser Schritt ist mit dem Bezugszeichen 120 versehen. Im dritten Schritt 130 erfolgt die Steuerung des Transceivers 12, so dass die Antennen (elektronisch) ausgerichtet werden. Die Steuerung basiert auf Basis der in den Schritten 110 und 120 erhaltenen Schritte. Die Ausrichtungssteuerung kann auch derart erfolgen, dass nicht zwingend die Antenne ausgerichtet wird, sondern eine geeignete Antenne (sofern mehrere vorhanden sind) ausgewählt wird, die in die entsprechende Richtung zeigt. Von diesem Schritt 130 gehen einerseits der Schritt 140 und anderseits der Schritt 150 hervor. In dem Schritt 140 wird sobald die Antenne ausgerichtet ist, ein Verbindungsaufbau mit dem Kommunikationspartner initiiert. Dies erfolgt selbstverständlich über die ausgerichtete bzw. ausgewählte Antenne. Beim Schritt 150 handelt es sich eigentlich nicht um einen tatsächlichen Schritt, sondern um das iterativ Durchführen der Schritte 110, 120 und 130 zur Korrektur der Ausrichtung bzw. zur Korrektur der Antennenauswahl.

Nachfolgend werden diese Schritte 110 bis 150 im Detail erläutert.

Das Erkennen von Kandidaten 110 aus den Sensordaten kann unterschiedlich ausgeprägt sein. Anhand der Sensordaten können beispielsweise mögliche Kommunikationsdaten ermittelt werden. Konkret heißt das, dass beispielsweise ein vorausfahrendes Fahrzeug mittels Radar detektiert wird. Hierbei ist es auch möglich, das vorausfahrende Fahrzeug bzw. den Kommunikationspartner zu identifizieren, wobei das Identifizieren anhand von typischen Merkmalen in den Sensordaten erfolgt. Ausgehend von dem Videobild kann beispielsweise das Kennzeichen erkannt werden oder auch mittels Bilderkennung die Fahrzeugart und Fahrzeuggröße, die dann einen Rückschluss auf die Identität zulassen.

Hierbei kann entweder der eine Sensor, wie z. B. ein optischer Sensor oder auch unterschiedliche Sensoren, wie z. B. eine Kombination aus einem Radarsensor und einem optischen Sensor eingesetzt werden.

Des Weiteren ist es möglich anhand von spezifischen Identifikationsmerkmalen zusätzlich eine Vorklassifikation der erkannten Kommunikationspartner hinsichtlich Ausstattung und Parametrierung von den vorhandenen Drahtlos-Schnittstellen durchzuführen. Dies kann beispielsweise durch einen Abgleich der beobachteten Merkmale bzw. der anhand der beobachteten Merkmale geschlossenen Identifikation mit einer statischen (lokalen) oder dynamischen (globalen) Datenbank erfolgen. Entsprechend weiteren Ausführungsbeispielen kann zusätzlich zwischen konstruktionsinhärenten Merkmalen (Fahrzeugart bzw. Fahrzeuggröße) der Kommunikationspartner bzw. das Zielfahrzeug dedizierte Merkmale, wie z. B. ein optisches Referenzmuster, einen RFID Transponder, IR Beacons oder LIDAR Reflektoren umfassen, die zur Identifikation und Klassifikation dienen.

In dem nächsten Schritt 120 werden dann Merkmale zur relativen räumlichen Zuordnung der Kandidaten zur lokalen Position extrahiert. Hierbei wird beispielsweise von einem lokalen Koordinatensystem um den (eigenen) verwendeten Transceiver ausgegangen. In diesem Koordinatensystem werden auf Basis der Sensordaten zumindest die relative Position des weiteren Transceivers im lokalen Koordinatensystem, aber auch optionaler Weise Bewegungsdaten ermittelt. Bei Bewegungsdaten kann es sich um beispielsweise mindestens die Richtung, möglicherweise aber auch um Entfernung und relative Geschwindigkeit handeln. Bei diesem Schritt 120 gibt es unterschiedliche Möglichkeiten, wie genau die Position der Antenne des weiteren Transceivers erkannt wird. Hierbei wird davon ausgegangen, dass der Transceiver zu einem Fahrzeug gehört und mittels der Fahrzeugantenne kommuniziert. Eine Möglichkeit ist, dass die Antenne immer in einer fest definierten Position am Fahrzeug angeordnet ist, d. h. also z. B. eine Platzierung in einer bestimmten Relation zu einem der erkannten Kennzeichen (dem Gesamtfahrzeug, dem Nummernschild oder einem dedizierten Merkmal des Fahrzeugs).

Nachdem nun die Position der Antenne bzw. die Relativposition der Antenne ausgehend von dem Transceiver bekannt ist, kann im Schritt 130 die elektronische oder mechanische Ausrichtung der Antenne ausgehend von den ermittelten Positionsdaten oder die Auswahl der geeigneten Antennen (auf der der entsprechend erkannten Position zugewandten Seite) durchgeführt werden.

Die zuvor ermittelten Positions- und Bewegungsdaten werden genutzt, um die passende mmW-Antenne (falls mehrere verschieden ausgerichtete vorhanden sind) auszuwählen (aufgrund der relativen Position) und das (elektronische) Beamforming dieser Antenne so zu konfigurieren, dass eine geeignete Richtwirkung in Richtung des Kandidaten ausgebildet wird.

Wie im Schritt 150 illustriert ist, können diese Schritte 110, 120 und 130 zur Korrektur der Ausrichtung bzw. zur Auswahl wiederholt werden.

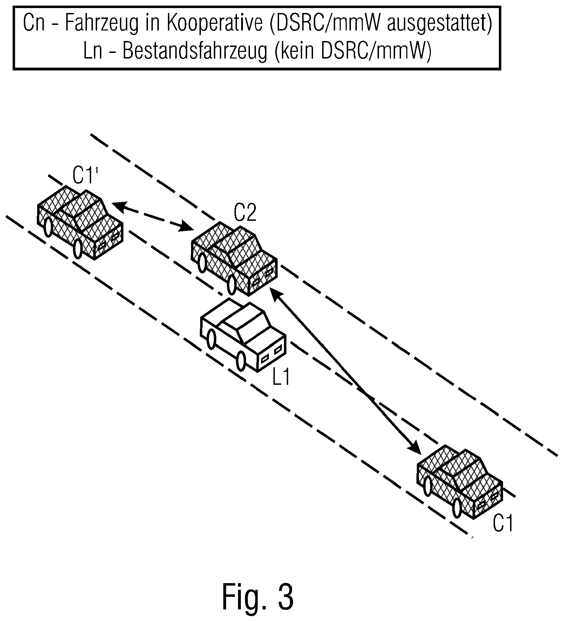

Im Hinblick auf Fig. 3 wird klar, dass dies bei sich relativ zueinander bewegenden Fahrzeugen notwendig ist. Ausgehend von der Situation, dass C1 und C2 eine Kommunikationsverbindung aufgebaut haben, wobei C1 über die vordere Luftschnittstelle mit der hinteren Luftschnittstelle von C2 kommuniziert, kann es zur Situation kommen, dass C1 seine Position beispielsweise derart ändert, dass es sich an der Position C1' aufhält, so dass dann hier die hintere Luftschnittstelle von C1 mit der vorderen Luftschnittstelle von C2 kommuniziert. Dieses Nachführen bzw. Auswählen der jeweiligen Luftschnittstelle bzw. Antenne während des Betriebes erfolgt in dem Schritt 150.

Ausgehend von den richtig ausgewählten bzw. richtig ausgerichteten Antennen, erfolgt die Initiierung des Verbindungsaufbaus über ein geeignetes Verfahren (z. B. ein standardisiertes Beacon-Signal), das zu dem ausgewählten bzw. erkannten Kandidaten geschickt wird. Die Signalisierung für den Verbindungsaufbau kann mindestens einen oder mehrere der folgenden Bestandteile umfassen: Wakeup-Signal zur Aktivierung des Empfängers am Zielfahrzeug, Kommunikationspräambel, die alle oder Teile der Informationen zum Wakeup-Signal enthält, und Payload-Daten.

In einem oder mehreren der Signalbestandteile können zusätzlich Informationen zu der Identifizierung des eigenen und des Zielfahrzeuges, der Betriebsparameter der eigenen Funkschnittstelle (Beamindex, Beambreite, Signalparameter (Referenzsignal, MCS, etc.)), sowie zur Identifizierung des angeforderten Dienstes bzw. Applikation eingebettet sein.

Eine Antwort des angesprochenen Fahrzeugs kann auf einen oder mehrere der genannten Signalbestandteile erfolgen und eine Statusindikation (Busy, Access Denied, Service Denied, ...), ggf. mit weiteren Dienst- oder Anwendungsspezifischen Informationen, enthalten.

Wie oben erläutert kann die Position des Transceivers bzw. der Umgebung erkannt werden. Hierbei kann auch eine Positionszuordnung erfolgen. Diese Zuordnung kann entsprechend Ausführungsbeispielen auch durch weitere Sensoren, wie z. B. GNSS-Sensoren unterstützt werden. Bei Kenntnis der aktuellen Position kann unter Zuhilfenahme von Nutzdaten eine Berechnung möglicher stabiler Reflexionen (z. B. ein Leitplanke oder Lärmschutzwänden) erfolgen.

Zusätzlich können entsprechend weiteren Ausführungsbeispielen die Sensordaten zur Unterstützung der Routenfunktionalität bzw. der Funkprotokolle genutzt werden. Hierbei erfolgt eine Ausnutzung der erfassten räumlichen Informationen, d. h. also der geometrischen Beziehungen von Objekten im Umfeld.

Wie bereits oben erwähnt, erfolgt entsprechend weiteren beanspruchten Ausführungsbeispielen neben der reinen Positionserkennung auch eine Erkennung von erkennbaren Merkmalen, indem z. B. das Fahrzeug klassifiziert oder identifiziert wird. Hierbei erfolgt dann eine Zuordnung zwischen der Funkschnittstelle und dem physikalische anhand der Sensordaten. Entsprechend Ausführungsbeispielen kann z. B. die Bildung der Mac-Adresse des Fahrzeuges über ein bestehendes Verfahren aus dem Kennzeichen erfolgen. Das heißt also, dass die Mac-Adresse des Fahrzeuges in eines durch die Sensorik erkennbares Merkmale mit hineincodiert sein. Z. B. umfasst die Mac-Adresse ein Hash, der sich aus einer Länderkennung sowie einem Zeichen des (Fahrzeug-) Kennzeichens zusammensetzt. Das Verwenden der Mac-Adresse ist deshalb vorteilhaft, weil diese Adresse bzw. Identifikationsnummer eindeutig einer Funkschnittstelle anhand des Hash zugeordnet werden kann. Abbildungsfunktionen für derartige Hash sind z.B. MD5 oder SHA256.

Entsprechend weiteren Ausführungsbeispielen kann der oben erläuterte Transceiver eine Mehrzahl von einzelnen Transceiverpfaden umfassen, die mit entsprechenden Antennen oder Antennengruppen gekoppelt sind. Diese Pfade können gleichzeitig betrieben werden, so dass mehrere Kommunikationsverbindungen gleichzeitig aufrechterhalten bzw. hergestellt werden. Entsprechend Ausführungsbeispielen sind die Antennen zugehörig zu den Transceiverpfaden an unterschiedlichen Positionen angeordnet. Wenn man von dem Ausführungsbeispiel des Fahrzeuges ausgeht, das den Transceiver integriert hat, so können die Antennen beispielsweise vorne und hinten angeordnet sein. Dies ermöglicht, dass mehrere Punkt-zu-Punkt-Verbindungen zu mehreren Fahrzeugen oder allgemein zu mehreren Modulen, wie z. B. Infrastrukturelementen (V2X-Kommunikation) realisierbar sind. Insofern ist das hier beschriebene Konzept bzw. Verfahren nicht auf eine einzelne Punkt-zu-Punkt-Verbindung beschränkt. Dieser Ansatz hat auch den Vorteil, wenn man von dem Übersichtsschaubild aus Fig. 3 ausgeht, dass ein Fahrzeug bzw. Transceiver an der Position des Fahrzeuges C1 mit dem Fahrzeug bzw. Transceiver an der Position C1' unter Zuhilfenahme des Fahrzeuges bzw. Transceivers C2 kommunizieren kann, auch wenn sich das Fahrzeug L1 mit der direkten Sichtlinie verbindet, so dass die hochdirektive Funkverbindung vom Transceiver an der Position C1 nicht zu dem Transceiver an der Position C1' gerichtet werden kann.

Wie bereits oben angedeutet, ist dieses Konzept nicht auf reine Fahrzeug-zu-Fahrzeug-Kommunikationsanwendungen beschränkt, sondern kann auch auf Kommunikationen zwischen Fahrzeugen und (ortsfesten) Infrastrukturelementen (V2X) erweitert werden.

Auch wenn bei obigen Ausführungsbeispielen davon ausgegangen wurde, dass der Sensor (vgl. Sensor 14 aus Fig. 1) durch einen einzelnen, wie z. B. einen Radar, einen Lidar oder einen optischen Sensor (Kamera) realisiert ist, sei an dieser Stelle angemerkt, dass auch eine Kombination aus mehreren gleichartigen oder unterschiedlichen Sensoren möglich ist. Das heißt also, dass entsprechend Ausführungsbeispielen der Sensor 14 zwei oder mehr gleichartige Sensoren, z. B. angeordnet an unterschiedlichen Positionen bzw. ausgerichtet in unterschiedliche Richtungen der Einheit, die den Transceiver beherbergt (z. B. PKW), umfassen kann. Entsprechend weiteren Ausführungsbeispielen kann jeder Sensor 14 durch eine Kombination von zwei oder mehr unterschiedlichen Sensorprinzipien (z. B. optischer Sensor + Radarsensor) realisiert sein. Hierbei ist es selbstverständlich auch möglich, dass diese Kombinationseinheit aus zwei Sensoren mehrfach an einer Einheit angeordnet ist, um z. B. mehrere Kommunikationspartner in unterschiedlichen Ausrichtungen zu beobachten. Zusätzlich sei auch angemerkt, dass der Sensortyp nicht auf die genannte Wahl eingeschränkt ist, sondern dass auch weitere Sensoren, wie z. B. Infrarotsensoren denkbar sind. Auch das Vorsehen einer stereoskopischen Anordnung als Sensor wäre denkbar, um so die Objekte im dreidimensionalen Raum besser erkennen zu können.

Bezüglich des Sensors sei weiter angemerkt, dass der Sensor sowohl ausgebildet sein kann, auf Basis von Einzelbildern ein Objekt bzw. Merkmal zu erkennen und eine Information bzgl. dieses (z.B. die Position oder zumindest die Richtung des Objektes relativ zu dem Sensor) dem Einzelbild zu entnehmen. Weiter kann natürlich auch das Objekt in einer Bildsequenz erkannt werden. Hierbei ist es dann auch möglich, dass zusätzliche Informationen, wie z. B. die Bewegungsrichtung oder eine Geschwindigkeit des Objektes oder einer Entfernung gleich miterkannt werden.

Obwohl manche Aspekte im Zusammenhang mit einer Vorrichtung beschrieben wurden, versteht es sich, dass diese Aspekte auch eine Beschreibung des entsprechenden Verfahrens darstellen, sodass ein Block oder ein Bauelement einer Vorrichtung auch als ein entsprechender Verfahrensschritt oder als ein Merkmal eines Verfahrensschrittes zu verstehen ist. Analog dazu stellen Aspekte, die im Zusammenhang mit einem oder als ein Verfahrensschritt beschrieben wurden, auch eine Beschreibung eines entsprechenden Blocks oder Details oder Merkmals einer entsprechenden Vorrichtung dar. Einige oder alle der Verfahrensschritte können durch einen Hardware-Apparat (oder unter Verwendung eines Hardware-Apparats), wie zum Beispiel einen Mikroprozessor, einen programmierbaren Computer oder eine elektronische Schaltung ausgeführt werden. Bei einigen Ausführungsbeispielen können einige oder mehrere der wichtigsten Verfahrensschritte durch einen solchen Apparat ausgeführt werden.

Je nach bestimmten Implementierungsanforderungen können Ausführungsbeispiele der Erfindung in Hardware oder in Software implementiert sein. Die Implementierung kann unter Verwendung eines digitalen Speichermediums, beispielsweise einer Floppy-Disk, einer DVD, einer Blu-ray Disc, einer CD, eines ROM, eines PROM, eines EPROM, eines EEPROM oder eines FLASH-Speichers, einer Festplatte oder eines anderen magnetischen oder optischen Speichers durchgeführt werden, auf dem elektronisch lesbare Steuersignale gespeichert sind, die mit einem programmierbaren Computersystem derart zusammenwirken können oder zusammenwirken, dass das jeweilige Verfahren durchgeführt wird. Deshalb kann das digitale Speichermedium computerlesbar sein.

Manche Ausführungsbeispiele gemäß der Erfindung umfassen also einen Datenträger, der elektronisch lesbare Steuersignale aufweist, die in der Lage sind, mit einem programmierbaren Computersystem derart zusammenzuwirken, dass eines der hierin beschriebenen Verfahren durchgeführt wird.

Allgemein können Ausführungsbeispiele der vorliegenden Erfindung als Computerprogrammprodukt mit einem Programmcode implementiert sein, wobei der Programmcode dahin gehend wirksam ist, eines der Verfahren durchzuführen, wenn das Computerprogrammprodukt auf einem Computer abläuft.

Der Programmcode kann beispielsweise auch auf einem maschinenlesbaren Träger gespeichert sein.

Andere Ausführungsbeispiele umfassen das Computerprogramm zum Durchführen eines der hierin beschriebenen Verfahren, wobei das Computerprogramm auf einem maschinenlesbaren Träger gespeichert ist.

Mit anderen Worten ist ein Ausführungsbeispiel des erfindungsgemäßen Verfahrens somit ein Computerprogramm, das einen Programmcode zum Durchführen eines der hierin beschriebenen Verfahren aufweist, wenn das Computerprogramm auf einem Computer abläuft.

Ein weiteres Ausführungsbeispiel der erfindungsgemäßen Verfahren ist somit ein Datenträger (oder ein digitales Speichermedium oder ein computerlesbares Medium), auf dem das Computerprogramm zum Durchführen eines der hierin beschriebenen Verfahren aufgezeichnet ist.

Ein weiteres Ausführungsbeispiel des erfindungsgemäßen Verfahrens ist somit ein Datenstrom oder eine Sequenz von Signalen, der bzw. die das Computerprogramm zum Durchführen eines der hierin beschriebenen Verfahren darstellt bzw. darstellen. Der Datenstrom oder die Sequenz von Signalen kann bzw. können beispielsweise dahin gehend konfiguriert sein, über eine Datenkommunikationsverbindung, beispielsweise über das Internet, transferiert zu werden.

Ein weiteres Ausführungsbeispiel umfasst eine Verarbeitungseinrichtung, beispielsweise einen Computer oder ein programmierbares Logikbauelement, die dahin gehend konfiguriert oder angepasst ist, eines der hierin beschriebenen Verfahren durchzuführen.

Ein weiteres Ausführungsbeispiel umfasst einen Computer, auf dem das Computerprogramm zum Durchführen eines der hierin beschriebenen Verfahren installiert ist.

Ein weiteres Ausführungsbeispiel gemäß der Erfindung umfasst eine Vorrichtung oder ein System, die bzw. das ausgelegt ist, um ein Computerprogramm zur Durchführung zumindest eines der hierin beschriebenen Verfahren zu einem Empfänger zu übertragen. Die Übertragung kann beispielsweise elektronisch oder optisch erfolgen. Der Empfänger kann beispielsweise ein Computer, ein Mobilgerät, ein Speichergerät oder eine ähnliche Vorrichtung sein. Die Vorrichtung oder das System kann beispielsweise einen Datei-Server zur Übertragung des Computerprogramms zu dem Empfänger umfassen.

Bei manchen Ausführungsbeispielen kann ein programmierbares Logikbauelement (beispielsweise ein feldprogrammierbares Gatterarray, ein FPGA) dazu verwendet werden, manche oder alle Funktionalitäten der hierin beschriebenen Verfahren durchzuführen. Bei manchen Ausführungsbeispielen kann ein feldprogrammierbares Gatterarray mit einem Mikroprozessor zusammenwirken, um eines der hierin beschriebenen Verfahren durchzuführen. Allgemein werden die Verfahren bei einigen Ausführungsbeispielen seitens einer beliebigen Hardwarevorrichtung durchgeführt. Diese kann eine universell einsetzbare Hardware wie ein Computerprozessor (CPU) sein oder für das Verfahren spezifische Hardware, wie beispielsweise ein ASIC.

Die oben beschriebenen Ausführungsbeispiele stellen lediglich eine Veranschaulichung der Prinzipien der vorliegenden Erfindung dar. Es versteht sich, dass Modifikationen und Variationen der hierin beschriebenen Anordnungen und Einzelheiten anderen Fachleuten einleuchten werden. Deshalb ist beabsichtigt, dass die Erfindung lediglich durch den Schutzumfang der nachstehenden Patentansprüche und nicht durch die spezifischen Einzelheiten, die anhand der Beschreibung und der Erläuterung der Ausführungsbeispiele hierin präsentiert wurden, beschränkt sei.

## Patentansprüche

1. Transceiver (10), der mit mindestens einer Antenne (12a1) gekoppelt ist und ausgebildet ist, eine Kommunikationsverbindung (16) zu einem weiteren Transceiver (17) aufzubauen, wobei ein von der mindestens einen Antenne (12a1) ausgesendetes und/oder empfangenes Funksignal zum Aufbau der Kommunikationsverbindung (16) ein gerichtetes Funksignal ist; und
wobei der Transceiver (10) ferner einen Sensor (14) umfasst, der ausgebildet ist, um eine Positionsinformation (P) einer Antenne (17a) des weiteren Transceivers (17) zu erkennen;
wobei der Transceiver (10) ausgebildet ist, um die mindestens eine Antenne (12a1) des Transceivers (10) so anzusteuern, dass das Funksignal in eine Richtung gerichtet ist, die zu einer Position entsprechend der Positionsinformation der Antenne (17a) des weiteren Transceivers (17) zeigt;
wobei der Transceiver (10) ferner eine Berechnungseinheit umfasst, die mit dem Sensor (14) gekoppelt ist und ausgebildet ist, um auf Basis eines Sensorsignals des Sensors (14) durch Merkmalsextraktion von einem oder mehreren Merkmalen die Positionsinformation der Antenne (17a) des weiteren Transceivers (17) zu erkennen;
wobei die Berechnungseinheit ausgebildet ist, anhand des einen oder der mehreren Merkmale den weiteren Transceiver (17) zu klassifizieren;
wobei die Berechnungseinheit ausgebildet ist, anhand des einen oder der mehreren Merkmale auf eine MAC-Adresse oder einen Teil der MAC-Adresse des weiteren Transceivers (17) rückzuschließen.

2. Transceiver (10) gemäß Anspruch 1, wobei der Sensor (14) eine Kamera umfasst; oder wobei der Sensor (14) ein Radar- oder einen LIDAR-Sensor umfasst.

3. Transceiver (10) gemäß einem der vorhergehenden Ansprüche, wobei der Transceiver (10) mit mindestens zwei Antennen (12a1, 12a2) gekoppelt ist und ausgebildet ist, um mittels der mindestens zwei Antennen (12a1, 12a2) das Funksignal dadurch zu richten, dass ein Beam geformt und/oder gelenkt wird.

4. Transceiver (10) gemäß einem der vorhergehenden Ansprüche, wobei der Transceiver (10) mit mindestens zwei Antennen (12a1, 12a2) an unterschiedlichen Positionen gekoppelt ist, und wobei das Richten der Kommunikationsverbindung (16) durch die Auswahl einer der mindestens zwei Antennen (12a1, 12a2) erfolgt.

5. Transceiver (10) gemäß einem der vorhergehenden Ansprüche, wobei das eine oder die mehreren Merkmale zumindest ein konstruktionsinhärentes Merkmal und/oder ein dediziertes Merkmal umfassen.

6. Transceiver (10) gemäß einem der vorhergehenden Ansprüche, wobei ein Abstand zwischen einem der ein oder mehreren Merkmale und der anzupeilenden Position der Antenne (17a) des weiteren Transceivers (17) bekannt ist, so dass ausgehend von der Positionsinformation (P) des einen der ein oder mehreren Merkmale die Position der mindestens einen Antenne (17a) des weiteren Transceivers (17) bestimmbar ist.

7. Transceiver (10) gemäß einem der vorhergehenden Ansprüche, wobei der Sensor (14) ausgebildet ist, um neben der Positionsinformation (P) eine Bewegungsinformation der Antenne (17a) des weiteren Transceivers (17) zu erkennen.

8. Transceiver (10) gemäß einem der vorhergehenden Ansprüche, wobei der Transceiver (10) ausgebildet ist, um Störungen aufgrund von Reflexionen des Funksignals zu kompensieren,
wobei der Transceiver (10) eine Simulationseinheit umfasst, die ausgebildet ist, ausgehen von einer Umgebungskarte des Transceivers (10) und/oder des weiteren Transceivers (17) die Reflexionen des Funksignals zu ermitteln.

9. Transceiver (10) gemäß einem der vorhergehenden Ansprüche, wobei die Kommunikationsverbindung (16) ein Aufwachsignal und/oder ein Kommunikationspräambelsignal umfasst, wobei das Kommunikationspräambelsignal einen Beamindex, eine Beambreite und/oder einen anderen Signalparameter aufweist.

10. Transceiver (10) gemäß einem der vorhergehenden Ansprüche, wobei die Positionsinformation eine Relativposition zwischen dem Sensor und der Position der Antenne (17a) des weiteren Transceivers (17) oder eine Relativposition zwischen dem Sensor und einer in Relation zu der Position der Antenne (17a) des weiteren Transceivers (17) Position oder eine Richtung ausgehend von dem Sensor zu der Position der Antenne (17a) des weiteren Transceivers (17) oder eine Richtung ausgehend von dem Sensor zu einer in Relation zu der Position der Antenne (17a) des weiteren Transceivers (17) Position umfasst.

11. Fahrzeug mit einem Transceiver (10) gemäß einem der vorhergehenden Ansprüche.

12. Verfahren (100) zum Betreiben eines Transceivers (10), der mit mindestens einer Antenne (12a1) gekoppelt ist, mit folgenden Schritten:
Aufbauen (110, 120) einer Kommunikationsverbindung zu einem weiteren Transceiver (17), wobei ein von der mindestens einen Antenne (17a) ausgesendetes und/oder empfangenes Funksignal zum Aufbau der Kommunikationsverbindung (16) eine gerichtetes Funksignal ist;
Erkennen (130) einer Positionsinformation (P) einer Antenne (17a) des weiteren Transceivers (17) mittels eines Sensors; und
Ansteuern der mindestens einen Antenne (12a1) so, dass das Funksignal in eine Richtung gerichtet ist, die zu einer Position entsprechend der Positionsinformation (P) der Antenne (17a) des weiteren Transceivers (17) zeigt;
Erkennen auf Basis eines Sensorsignals des Sensors (14) durch Merkmalsextraktion von einem oder mehreren Merkmalen der Positionsinformation der Antenne (17a) des weiteren Transceivers (17);
Klassifizieren anhand des einen oder der mehreren Merkmale des weiteren Transceiver (17);
Rückschließen anhand des einen oder der mehreren Merkmale des weiteren Transceiver (17) auf eine MAC-Adresse oder einen Teil der MAC-Adresse des weiteren Transceivers (17).

13. Verfahren (100) gemäß Anspruch 12, wobei die Schritte Erkennen und Ansteuern iterativ wiederholt werden.

14. Computerprogramm mit einem Programmcode zur Durchführung des Verfahrens nach Anspruch 12 oder 13 mittels des Transceivers gemäß Ansprüche 1-11, wenn das Programm auf einem Computer abläuft.

## Claims

1. Transceiver (10) coupled to at least one antenna (12a1) and configured to establish a communication link (16) to a further transceiver (17), wherein a radio signal intended for establishing the communication link (16) and transmitted and/or received by the at least one antenna (12a1) is a directional radio signal; and
the transceiver (10) further comprising a sensor (14) configured to detect positional information (P) of an antenna (17a) of the further transceiver (17);
the transceiver (10) being configured to drive the at least one antenna (12a1) of the transceiver (10) such that the radio signal is directed into a direction that faces a position corresponding to the positional information of the antenna (17a) of the further transceiver (17);
the transceiver (10) further including a computing unit coupled to the sensor (14) and configured to detect the positional information of the antenna (17a) of the further transceiver (17) by means of feature extraction of one or several features on the basis of a sensor signal of the sensor (14);
wherein the computing unit is configured to classify the further transceiver (17) on the basis of the one or several features;
wherein the computing unit is configured to draw conclusions, on the basis of the one or several features, to an MAC address or a part of the MAC address of the further transceiver (17).

2. Transceiver (10) according to claim 1, wherein the sensor (14) includes a camera, or wherein the sensor (14) includes a radar sensor or a LIDAR sensor.

3. Transceiver (10) according any of the preceding claims, the transceiver (10) being coupled to at least two antennas (12a1, 12a2) and is configured to direct the radio signal by means of the at least two antennas (12a1, 12a2) by forming and/or guiding a beam.

4. Transceiver (10) according to any of the preceding claims, the transceiver (10) being is coupled to at least two antennas (12a1, 12a2) at different positions, and wherein directing the communication link (16) is carried out by selecting one of the at least two antennas (12a1, 12a2).

5. Transceiver (10) according to any of the preceding claims, wherein the one or several features include at least a construction-intrinsic feature and/or a dedicated feature.

6. Transceiver (10) according to any of the preceding claims, wherein a distance between one among the one or several features and the position to be envisaged of the antenna (17a) of the further transceiver (17) is known, so that, on the basis of the positional information (P) of the one among the one or several features, the position of the at least one antenna (17a) of the further transceiver (17) may be determined.

7. Transceiver (10) according to any of the preceding claims, wherein the sensor (14) is configured to detect movement information of the antenna (17a) of the further transceiver (17) besides the positional information (P).

8. Transceiver (10) according to any of the preceding claims, wherein the transceiver (10) is configured to compensate for interferences due to reflections of the radio signal,
wherein the transceiver (10) includes a simulation unit configured to determine the reflections of the radio signal on the basis of on an area map of the transceiver (10) and/or of the further transceiver (17).

9. Transceiver (10) according to any of the preceding claims, wherein the communication link (16) includes a wake-up signal and/or a communication preamble signal, the communication preamble signal comprising a beam index, a beam width, and/or a different signal parameter.

10. Transceiver (10) according to any of the preceding claims, wherein the positional information includes a relative position between the sensor and the position of the antenna (17a) of the further transceiver (17), or a relative position between the sensor and a position in relation to the position of the antenna (17a) of the further transceiver (17), or a direction from the sensor to the position of the antenna (17a) of the further transceiver (17), or a direction from the sensor to a position in relation to the position of the antenna (17a) of the further transceiver (17).

11. Vehicle comprising a transceiver (10) according to any of the preceding claims.

12. Method (100) of operating a transceiver (10) coupled to at least one antenna (12a1), the method comprising:
establishing (110, 120) a communication link to a further transceiver (17), wherein a radio signal intended for establishing the communication link (16) and transmitted and/or received by the at least one antenna (17a) is a directional radio signal;
detecting (130) positional information (P) of an antenna (17a) of the further transceiver (17) by means of a sensor; and
driving the at least one antenna (12a1) such that the radio signal is directed to a direction that faces a position corresponding to the positional information (P) of the antenna (17a) of the further transceiver (17);
detecting the positional information of the antenna (17a) of the further transceiver (17) by means of feature extraction of one or several features on the basis of a sensor signal of the sensor (14);
classifying the further transceiver (17) on the basis of the one or several features;
drawing conclusions, on the basis of the one or several features of the further transceiver (17), to an MAC address or a part of the MAC address of the further transceiver (17).

13. Method (100) according to claim 12, wherein the steps of detecting and driving are repeated iteratively.

14. Computer program having a program code for performing a method according to claim 12 or 13 by means of the transceiver according to any of claims 1-11, when the program runs on a computer.

## Revendications

1. Emetteur-récepteur (10) qui est couplé à au moins une antenne (12a1) et est conçu pour établir une liaison de communication (16) avec un autre émetteur-récepteur (17), dans lequel un signal radio émis et/ou reçu par l'au moins une antenne (12a1) pour établir la liaison de communication (16) est un signal radio directionnel; et
dans lequel l'émetteur-récepteur (10) comporte par ailleurs un capteur (14) qui est conçu pour détecter une information de position (P) d'une antenne (17a) de l'autre émetteur-récepteur (17);
dans lequel l'émetteur-récepteur (10) est conçu pour commander l'au moins une antenne (12a1) de l'émetteur-récepteur (10) de sorte que le signal radio soit dirigé dans une direction qui pointe vers une position correspondant à l'information de position de l'antenne (17a) de l'autre émetteur-récepteur (17);
dans lequel l'émetteur-récepteur (10) comporte par ailleurs une unité de calcul qui est couplée au capteur (14) et est conçue pour détecter, sur base d'un signal du capteur (14), par extraction d'une ou plusieurs caractéristiques, l'information de position de l'antenne (17a) de l'autre émetteur-récepteur (17);
dans lequel l'unité de calcul est conçue pour classifier, à l'aide des une ou plusieurs caractéristiques, l'autre émetteur-récepteur (17);
dans lequel l'unité de calcul est conçue pour déduire, à l'aide des une ou plusieurs caractéristiques, une adresse MAC ou une partie de l'adresse MAC de l'autre émetteur-récepteur (17).

2. Emetteur-récepteur (10) selon la revendication 1, dans lequel le capteur (14) comporte une caméra; ou dans lequel le capteur (14) comporte un radar ou un capteur LIDAR.

3. Emetteur-récepteur (10) selon l'une des revendications précédentes, dans lequel l'émetteur-récepteur (10) est couplé à au moins deux antennes (12a1, 12a2) et est conçu pour diriger, au moyen des au moins deux antennes (12a1, 12a2), le signal radio par le fait qu'il est formé et/ou dirigé un faisceau.

4. Emetteur-récepteur (10) selon l'une des revendications précédentes, dans lequel l'émetteur-récepteur (10) est couplé à au moins deux antennes (12a1, 12a2) à des positions différentes, et dans lequel la direction de la liaison de communication (16) a lieu par la sélection de l'une des au moins deux antennes (12a1, 12a2).

5. Emetteur-récepteur (10) selon l'une des revendications précédentes, dans lequel l'une ou les plusieurs caractéristiques comportent au moins une caractéristique inhérente à la construction et/ou une caractéristique dédiée.

6. Emetteur-récepteur (10) selon l'une des revendications précédentes, dans lequel est connue une distance entre l'une des une ou plusieurs caractéristiques et la position à viser de l'antenne (17a) de l'autre émetteur-récepteur (17), de sorte qu'en partant de l'information de position (P) de l'une des une ou plusieurs caractéristiques puisse être déterminée la position de l'au moins une antenne (17a) de l'autre émetteur-récepteur (17).

7. Emetteur-récepteur (10) selon l'une des revendications précédentes, dans lequel le capteur (14) est conçu pour détecter, outre l'information de position (P), une information de mouvement de l'antenne (17a) de l'autre émetteur-récepteur (17).

8. Emetteur-récepteur (10) selon l'une des revendications précédentes, dans lequel l'émetteur-récepteur (10) est conçu pour compenser les interférences dues aux réflexions du signal radio,
dans lequel l'émetteur-récepteur (10) comporte une unité de simulation qui est conçue pour déterminer, en partant d'une carte des environs de l'émetteur-récepteur (10) et/ou de l'autre émetteur-récepteur (17), les réflexions du signal radio.

9. Emetteur-récepteur (10) selon l'une des revendications précédentes, dans lequel la liaison de communication (16) comporte un signal de réveil et/ou un signal de préambule de communication, dans lequel le signal de préambule de communication présente un indice de faisceau, une largeur de faisceau et/ou un autre paramètre de signal.

10. Emetteur-récepteur (10) selon l'une des revendications précédentes, dans lequel l'information de position comporte une position relative entre le capteur et la position de l'antenne (17a) de l'autre émetteur-récepteur (17) ou une position relative entre le capteur et une position par rapport à la position de l'antenne (17a) de l'autre émetteur-récepteur (17) ou une direction partant du capteur vers la position de l'antenne (17a) de l'autre émetteur-récepteur (17) ou une direction partant du capteur vers une position par rapport à la position de l'antenne (17a) de l'autre émetteur-récepteur (17).

11. Véhicule avec un émetteur-récepteur (10) selon l'une des revendications précédentes.

12. Procédé (100) permettant de faire fonctionner un émetteur-récepteur (10) qui est couplé à au moins une antenne (12a1), aux étapes suivantes consistant à:
établir (110, 120) une liaison de communication avec un autre émetteur-récepteur (17), où un signal radio émis et/ou reçu par l'au moins une antenne (17a) pour établir la liaison de communication (16) est un signal radio directionnel;
détecter (130) une information de position (P) d'une antenne (17a) de l'autre émetteur-récepteur (17) au moyen d'un capteur; et commander l'au moins une antenne (12a1) de sorte que le signal radio soit dirigé dans une direction qui pointe vers une position correspondant à l'information de position (P) de l'antenne (17a) de l'autre émetteur-récepteur (17);
détecter, sur la base d'un signal du capteur (14), par extraction d'une ou plusieurs caractéristiques, l'information de position de l'antenne (17a) de l'autre émetteur-récepteur (17);
classifier l'autre émetteur-récepteur (17) à l'aide de l'une ou des plusieurs caractéristiques;
déduire, à l'aide de l'une ou des plusieurs caractéristiques de l'autre émetteur-récepteur (17), une adresse MAC ou une partie de l'adresse MAC de l'autre émetteur-récepteur (17).

13. Procédé (100) selon la revendication 12, dans lequel les étapes consistant à détecter et à commander sont répétées de manière itérative.

14. Programme d'ordinateur avec un code de programme pour réaliser le procédé selon la revendication 12 ou 13 au moyen de l'émetteur-récepteur selon les revendications 1 à 11 lorsque le programme est exécuté sur un ordinateur.
